(19) Europäisches Patentamt
European Patent Office
Office européen des brevets

(11) Publication number: **0 154 442 B1**

(12) **EUROPEAN PATENT SPECIFICATION**

(45) Date of publication of patent specification: **09.09.92**

(51) Int. Cl.5: **G02F 1/01**, G02F 1/133, G02B 5/20, C25D 13/12, C09D 5/44

(21) Application number: **85301107.0**

(22) Date of filing: **19.02.85**

(54) **A colour member and method of manufacturing the same.**

(30) Priority: **02.03.84 JP 40654/84**
**02.03.84 JP 40655/84**

(43) Date of publication of application:
**11.09.85 Bulletin 85/37**

(45) Publication of the grant of the patent:
**09.09.92 Bulletin 92/37**

(84) Designated Contracting States:
**DE FR GB NL**

(56) References cited:

**JAPAN DISPLAY, 4th October 1983, pages 206-209, Kobe, JP; M. SUGINOYA et al.: "Multicolor graphic LCD with tri-colored layers formed by electrodeposition"**

**JSDC, vol. 94, no. 2, February 1978, pages 53-55, Bradford, Yorkshire, GB; K. NISHIDA et al.: "The dyeing properties on polyester fibre blends of monoazo reactive disperse dyes containing a vinylsulphonyl group"**

(73) Proprietor: **SEIKO INSTRUMENTS INC.**
**31-1, Kameido 6-chome Koto-ku**
**Tokyo 136(JP)**

Proprietor: **SHINTO PAINT CO., LTD.**
**10-73, Minami-Tsukaguchicho 6-chome**
**Amagasaki(JP)**

(72) Inventor: **Suginoya, Mitsuru c/o Seiko Instruments &**
**Electronics Ltd. 6-31-1, Kameido**
**Koto-ku Tokyo(JP)**
Inventor: **Iwasa, Koji c/o Seiko Instruments &**
**Electronics Ltd. 6-31-1, Kameido**
**Koto-ku Tokyo(JP)**
Inventor: **Kamamori, Hitoshi c/o Seiko Instruments &**
**Electronics Ltd. 6-31-1, Kameido**
**Koto-ku Tokyo(JP)**
Inventor: **Sano, Yutaka c/o Seiko Instruments &**
**Electronics Ltd. 6-31-1, Kameido**
**Koto-ku Tokyo(JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

Inventor: **Terada, Yumiko c/o Seiko Instruments &**
**Electronics Ltd. 6-31-1, Kameido**
**Koto-ku Tokyo(JP)**
Inventor: **Kato, Naoki c/o Seiko Instruments &**
**Electronics Ltd. 6-31-1, Kameido**
**Koto-ku Tokyo(JP)**
Inventor: **Suzuki, Tameyuki**
**3-1-7, Yamanone**
**Zushi-shi Kanagawa(JP)**
Inventor: **Yasukawa, Junichi**
**2-13-13, Higashi-Kaigan-Minami**
**Chigasaki-shi Kanagawa(JP)**
Inventor: **Nomura, Toyokazu**
**5-1-1, Higashi-Narashino**
**Narashino-shi Chiba(JP)**
Inventor: **Ito, Shinji**
**3-7-24 ,Higashi-Narashino**
**Narashino-shi Chiba(JP)**
Inventor: **Touda, Kazuo**
**6-6-14, Kanamachi**
**Katsushika-ku Tokyo(JP)**

(74) Representative: **Miller, Joseph et al**
**J. MILLER & CO. 34 Bedford Row, Holborn**
**London WC1R 4JH(GB)**

## Description

This invention relates to colour members.

Generally known methods of manufacturing multicolour patterns, for example, on glass substrates, include colouring by surface diffusion of metallic ions, colouring by printing and baking by use of low-melting fritted glass, and colouring by forming a printed pattern by screen printing with an ink containing an organic high polymeric binder.

These methods have both merits and demerits. For example, the colouring by diffusion of metallic ions allows the glass substrate to retain flatness but involves a complex process and fails to colour the substrate to a desired hue.

Colouring by printing has the drawback that printing on a glass substrate is difficult, and the resulting coloured layers themselves lack uniformity and transparency.

Other disadvantages common to these methods are difficulties to be encountered in producing fine patterns using a larger number of colours and the tendency towards misalignment of designs or deviations from the desired pattern position.

When substrates other than glass are used, printing and other techniques can also be used to obtain multicolour patterns. Again it is difficult to manufacture fine and multicolour patterns.

One way to obtain fine patterns is using photolithography. However, each colour requires a separate photolithographic step to be taken to produce a multicolour pattern, thus making the process quite complex.

Figure 1 shows an example of a multicolour display device. A transparent substrate 1 has thereon display electrodes 2a, 2b, 2c formed of a transparent electroconductive film on which a desired figure or letter is patterned. Reference numerals 3a, 3b, 3c denote colour filters formed in close contact with the surface of the display electrodes 2a, 2b, 2c respectively. Reference numeral 4 denotes a transparent counter electrode and reference numeral 5 denotes a transparent counter substrate on which the counter electrode is formed. A material which is caused to function as an optical shutter by an applied voltage, such as a liquid crystal or electrochromic material, fills the space between the two substrates 1, 5. The colour filters 3a, 3b, 3c are of different colours. When a voltage is selectively applied between the display electrodes 2a, 2b, 2c and the counter electrode 4, a multicolour display is produced.

A multicolour display device using colour filters is highly effective in practice because it is of simple construction, any colour can be relatively easily obtained, and various display materials and display systems can be employed.

However, when manufacturing a multicolour display device using colour filters, care must be taken to prevent displacement between the pattern of the display electrodes and the pattern of the colour filters formed thereon. Especially, when a colour graphic display device using a fine pattern of three primary colours is constructed, a crucial problem from the point of view of manufacture concerns how to make the pattern of the display electrodes register that of the colour filters. Colour separation to achieve a multicolour display is another factor that makes the manufacturing process complex. Further, when the colouring is performed by dyeing, an intermediate step of resist treatment is necessary to avoid re-dyeing of an already coloured area, thus adding complexity to the process. The choice of the resist technique to be used is a knotty problem as it depends on the type of dye to be employed.

Generally, the methods for producing colour filters so far contrived have involved screen printing, photolithography, and other similar processes. Screen printing requires no resist but the fineness of patterning is limited: the greater the number of colours, the lower will be the accuracy of the printing, with the printed pattern increasingly out of register with the pattern of display electrodes. Photolithography permits fine patterning but necessitates a photolithographic step for each colour and also a resist treatment to prevent re-dyeing. This makes the process so complicated that the merit of this simple colouring method is lost.

In their European Patent Application No. 83307818.1, the present applicants disclose colour filters formed by electro-deposition from a solution in which an electrodepositable polymer and colouring matter is disposed. Although simple, this method does not suffer from the problem of pattern displacement even when the pattern is very fine, and can be used economically to produce a colour member with a high colour fastness and without the necessity of any specific resist process when the colours are changed.

However, there can be difficulty with physical retention of the colouring matter in the coloured filters when the coloured filters are in contact with liquid crystal or other chemical substances because this may result in the removal or loss of colouring matter from the coloured filters.

According to one aspect of the present invention there is provided a colour filter element comprising a substrate, a plurality of discrete electrodes of an electroconductive material on the substrate having a desired pattern, and a coloured layer which contains a polymer and colouring matter and which is formed

on the electrodes by electrodeposition, characterised in that the colouring matter is a dye having a reactive group and in that the polymer and the dye in the coloured layer are chemically bonded to each other by a covalent linkage with the reactive group.

Preferably, the electroconductive layer is light transmissive.

The electroconductive layer may include at least one of tin oxide, indium oxide and antimony oxide.

The polymer and the colouring matter in the coloured layer preferably are chemically bonded to each other through a reactive group which is at least one of phosphonate, monochlorotriazinyl, dichlorotriazinyl, vinylsulphonyl, chloropyrimidinyl, chloropyridazonyl, alkylsulphate, chloroquionoxalinyl, and acrylamide groups.

The polymer may consist substantially of at least one of water-soluble or dispersible acrylic, polyester and melamine resins.

According to a further aspect of the present invention there is provided a method of manufacturing a colour filter element comprising the steps of forming a plurality of discrete electrodes of an electroconductive material on a substrate and forming a coloured layer on the electrodes by electro-depositing a polymer and colouring matter, characterised by chemically bonding the polymer and the colouring matter, which is a dye having a reactive group, by a covalent linkage with the reactive group.

In one embodiment the polymer and the colouring matter are chemically bonded to each other prior to electrodeposition.

In another embodiment the polymer and the colouring matter are chemically bonded to each other after electrodeposition.

The invention is illustrated, merely by way of example, in the accompanying drawings, in which:-

Figure 1 is a schematic sectional view of a display device with a colour member;

Figure 2 is a schematic plan view showing an embodiment of a colour member according to the present invention;

Figure 3 is a cross-sectional view taken on the line III-III of Figure 2;

Figure 4 is a schematic plan view of an embodiment of a multicolour display device using a colour member according to the present invention; and

Figure 5 is a cross-sectional view taken on the line V-V of Figure 4.

A colour member, a method of forming a coloured layer or filter by electrodeposition and a method for chemically bonding a colouring matter with a polymer will now be explained. A common method for electrodepositing a polymer layer on an electrode involves insolubilising the polymer from a polymer solution and depositing the same on the electrode. For example, an electrodeposition coating method has been known in industrial fields, which comprises dispersing a pigment in an aqueous polymer solution, immersing a metal electrode in the solution and thereby electrodepositing a coloured layer on the metal electrode. The method, known as electrodeposition coating, is used, for example, for precoating automobile bodies. The principle of the method is as follows: a hydrophilic group such as a carboxyl group is introduced into a polymer; the carboxyl group is neutralised and solubilised with inorganic alkali, organic amine, etc.; when an electrode is immersed in the solubilised polymer solution and a voltage is applied, carboyxl anions, dissociated in the solution, are electrophoresed towards the positive electrode and react with protons produced by the electrolysis of water on the electrode; and the polymer is insolubilised and deposited. Thus, the reaction given by the following formula takes place on the positive electrode and a polymer layer is deposited:

$$2H_2O \rightarrow 4H^+ + O_2\uparrow + 4e^-$$

$$\underset{COO}{\overset{\sim}{|}} + H^+ \rightarrow \underset{COOH}{\overset{\sim}{|}} \quad \text{(deposition)}$$

This is known as anionic electrodeposition.

Conversely, when a basic group (e.g. polyamine) is used as the hydrophilic group to be neutralised and solubilised by acid, a polymer layer is deposited on the negative electrode. This is known as cationic electrodeposition. In the case where the electrodeposited polymer is electrically insulating, as the electrodes become coated with the polymer the current is reduced, whereby any further increase in the film thickness would not be expected. Actually, however, complete coating is prevented by oxygen bubbles evolved by electrolysis of water, and so some increase in film thickness is obtained. The polymer layer acquired has a low water content due to electroendosmosis and has a uniform thickness.

As a polymer for such anionic electrodeposition there has been suggested an addition compound of

natural drying oil with maleic acid, an alkyd resin having carboxyl groups, an addition compound of epoxy resin and maleic acid, a polybutadiene resin having carboxyl groups, a copolymer of acrylic or methacrylic acid and its ester, etc. Other polymers or organic compounds having other functional groups may be sometimes incorporated depending on the nature of the polymer layer to be electrodeposited. These polymers are selected according to the desired characteristics for the coloured layer. For example, if a transparent coloured layer is required, an acrylic polymer or oil-free polyester polymer may be used. Methods of manufacturing electrodeposition polymers vary according to the types of polymer. For example, the manufacture of acrylic polymers involves radical copolymerisation of acrylic or methacrylic acid having an acidic group with acrylic or methacrylic ester having a neutral group. In this case, the ratio of carboxyl groups to the neutral groups is important: if there are too many carboxyl groups the insolubilisation of the electrodeposited polymer is insufficient, while if there are too few, the solubility upon neutralisation becomes insufficient. An -OH group is sometimes incorporated in order to increase the solubility. After the composition of the monomer has been determined, polymerisation is usually carried out using an ordinary radical polymerisation initiator in a hydrophilic solvent such as isopropyl alcohol, n-butyl alcohol, tert-butyl alcohol, methyl cellosolve, ethyl cellosolve, isopropyl cellosolve, butyl cellosolve, diethylene glycol methyl ether, etc.

In Japanese Patent Application No. 99017/1983 and Japanese Application No. 64117/1983 (European Application No. 83307818.1) there is disclosed electrodeposited coloured films with good transparency obtained by using dyes insoluble or slightly soluble in water as colouring matter and the resulting coloured films can be used as a colour member or in a multicolour display device. It is to be noted, however, that some water-insoluble dyes are highly soluble in various organic solvents. In the case of a multicoloured liquid crystal display device with such a dye, it is possible that dissolution of the colouring matter in the liquid crystal material takes place because the coloured layers are in contact with the liquid crystal material. This possibility renders it necessary to evaluate beforehand the reliabilities of the particular dyes to be employed. In other applications, colour durability is generally required.

The present invention is predicated upon the discovery of a method for chemically bonding a polymer with colouring matter to form durable coloured layers so as to enhance the chemical fastness of a multicolour pattern to be formed by electrodeposition.

At the present time, reactive dyes are commercially available as dyes chemically combinable with polymeric fibres, and the fastness properties of the dyed goods are highly evaluated. Most reactive dyes on the market have an ionisable group, such as sodium sulphonate, which imparts water solubility. When such a dye is added to an electrodeposition bath and electrodeposition is attempted in the usual manner, the rate of electrophoresis is widely different from that of the polymer so that film thickness and uniformity is extremely difficult to control. This means that the colouring matter to be used for electrodeposition is desired to be slightly charged electrically to perform electrophoresis generally at the same rate as the polymer. A first method to attain this end comprises chemically bonding the reactive dye with the polymer to produce a coloured polymer for electrodeposition. It has now been found that the above-mentioned problem arising from the difference in the rate of electrophoresis between the dye and the polymer can be solved in this way.

Generally, reactive dyes have an active group such as monochlorotriazinyl, dichlorotriazinyl, vinylsulfonyl, chloropyrimidinyl, chloropyridazonyl, alkylsulfate, chloroquionoxalinyl or acrylamide group. Dyeing is effected as such a group reacts chemically with the -OH group of cellulosic fibre or with the amino group of nylon, wool, silk, etc. For example reactions with the OH group under alkaline conditions takes place in the following way:

(1) in the case of monochlorotriazinyl group

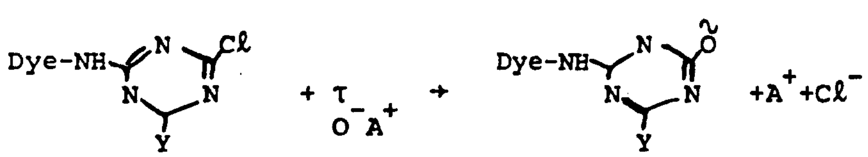

(reactive dye) (cellulose)

where $A^+$ is $Na^+$ or $K^+$,

(2) in the case of a vinylsulphonyl group

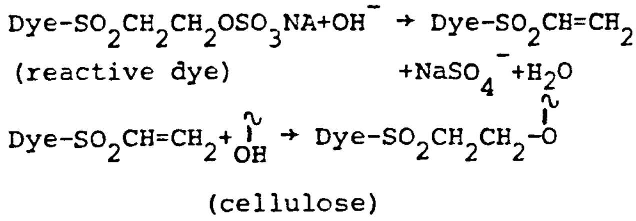


(3) in the case of an alkylsulphate group

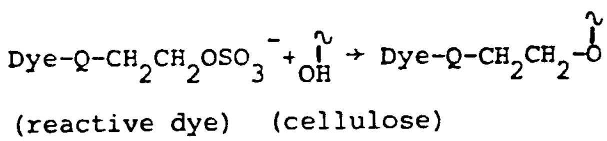


where Q is $-SO_2NH-$ or -alkylene-N(alkyl).

The reactive dye is bonded with the polymer by a covalent linkage, thus conferring colour fastness. When the coloured polymer thus obtained is utilised for electrodeposition, the colouring matter and the polymer remain combined throughout the electrodeposition and they can together form an integral coloured layer. Since the polymer usually contains, for the purpose of increasing water-solubility, a fairly high percentage of OH groups that can act as the reactive group of the reactive dye, it permits the practice of the present invention without great difficulty.

Another method of utilising a reactive dye consists in removing the ionisable group from the dye and weakening its electric charge to a level corresponding to the rate of electrophoresis of the particular polymer. One way of accomplishing this is to replace the sodium sulphonate group in the dye molecules with a weakly dissociating functional group such an $^{-}OH$ or amino group. At its simplest, the sodium ion of the sodium sulphonate in the dye molecule may be ion-exchanged with calcium or barium to make the dye scarcely soluble in water. This is done by adding a calcium or barium salt to an aqueous solution of the dye and obtaining the precipitate. When the scarcely water-soluble reactive dye thus obtained is dispersed together with the polymer in water and electrodeposition is performed, a coloured electrodeposited film results. The bonding of the polymer with the reactive dye is concluded by subsequent heat treatment and a fast coloured film can be obtained.

The present invention will now be described in detail with reference to the following Examples.

EXAMPLE 1

A polyester resin for anionic electrodeposition, comprising trimellitic anhydride and trimethylolpropane as chief monomers and having an acid value of 50 and a hydroxyl value of 70 was employed as a polymer. This resin appeared to have partially the following structure:

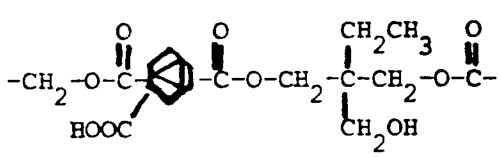

It has a carboxyl group that was essential for electrodeposition and an OH group that enhanced water-solubility. The resin was made water-soluble upon neutralisation of the carboyxl group with an alkali or an amine, and was itself anionic-electrodepositable. For its reaction with a reactive dye, an aqueous solution of the resin made alkaline in the manner described was heated to 80°C after the addition of a red reactive dye (Trade Mark: CIBACRON, a product of Ciba-Geigy) having a monotriazinyl group. Care was taken not to use too high a temperature because overheating would cause hydrolysis of the polyester resin. After the reaction for 1 to 2 hours, the reaction product was cooled and made acidic by the addition of sulphuric acid, etc., when a dyed resin precipitated. This resinous precipitate was repeatedly washed with acid and alkali to remove unreacted dye and impurity ions therefrom. The thoroughly washed resin was dissolved in ethyl cellosolve to produce a solution at a resin concentration of 70% by weight, and the pH of the solution was

adjusted with an amine to 7.5 - 8.0. This solution was mixed with a water-soluble melamine resin at a polyester-to-melamine ratio of 7:3 to impart a thermosetting property and the mixture was diluted with water to a total resin concentration of 10% by weight. A red electrodeposition bath was thus prepared.

Then, reactive dyes in blue and green colours were used and blue and green electrodeposition baths were prepared in the same manner.

Using these electrodeposition baths a multicolour display device as shown in Figure 2 and Figure 3 was made by a method which will now be explained in detail.

Patterning Process

A substrate 6 made of a transparent material, has a transparent electroconductive tin oxide film formed by a spray coating method. The transparent electroconductive film was patterned in strips by etching to obtain transparent electrodes 7.

Electrodeposition Process

The substrate 6 on which the transparent electrodes 7 had been formed was immersed in an electrodeposition bath prepared as described above. A group of the electrodes 7 to be coloured identically were selected. A voltage of 10V was applied for 3 minutes using the selected group of electrodes as the positive electrode. A large current flowed immediately after application of the voltage, but the current gradually declined approaching zero. After the application of the voltage the substrate 6 was taken out of the electrodeposition bath and thoroughly washed with water to remove the solution deposited on the electrodes 7 to which no voltage had been applied. Then, the substrate was dried after washing and it was found that a coloured layer with excellent transparency had been formed on the electrodes to which the voltage had been applied.

Curing Process

The polyester resin and melamine resin in the electrodeposited coloured layer were cured by condensation reaction induced by baking. When the resins had been baked in air at 175°C for 30 minutes, the coloured layer was completely cured. The film thickness of the coloured layer on this occasion was 1.5 µm.

The cured coloured layer was found to be a completely electrically insulating layer which could not have a further layer electrodeposited thereon nor dyed again when the substrate was immersed in the electrodeposition bath and the voltage applied. Second and third coloured layers were formed by repeating the process of: selecting a second group of electrodes 7 to be coloured identically, electrodepositing a coloured layer on the selected group of electrodes in an electrodeposition bath in which a dye of a different colour had been added, and curing.

In this embodiment, strip colour filters 8 of 200 µm width of red, blue and green were manufactured by the following extremely simple method: patterning → electrodeposition of a red filter → curing → electrodeposition of a blue filter → curing → electrodeposition of a green filter → curing. The colour filters thus obtained had no colour shift and were uniform and highly resistant to acids, alkali, various organic solvents, and hot water.

EXAMPLE 2

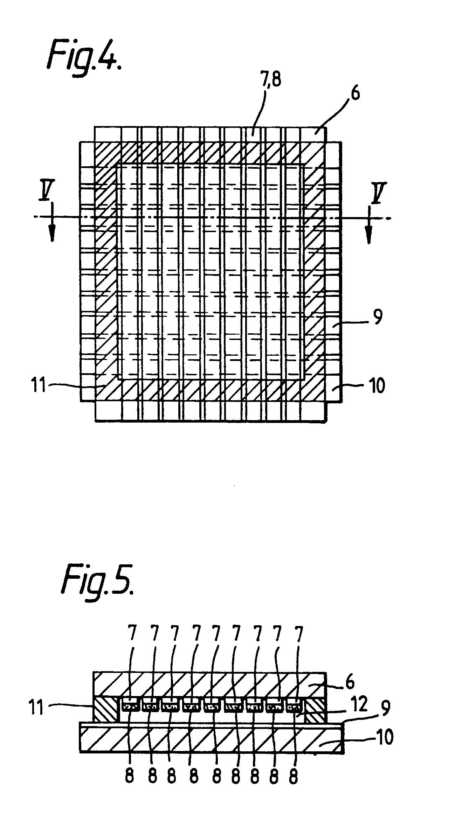

An embodiment of a multicolour display device having the colour member of Example 1 is shown in Figure 4 and Figure 5.

Using Example 1, the colour filters 8 were formed on the transparent electrodes 7. The substrate 6 was disposed opposite to a counter substrate 10 interposing spaces 11 therebetween. The electrodes 7 faced counter electrodes 9 and the direction of the strips of the two were at right angles. A TN-FEM (twisted nematic field effect mode) liquid crystal material 12 was disposed in the space between the substrates to form a display cell. The display cell was sandwiched between a polariser and an analyser whose transmission axes were parallel. When a voltage was applied between the transparent electrodes 7 and the counter electrodes 9 the colours of the transparent colour filters 8 were displayed when viewed from the direction of the substrate 6 or from the direction of the substrate 10. The display cell appeared black with no voltage applied. When light was incident on the counter substrate 10, the colours of the colour filters 8 were vividly displayed due to the excellent transparency of the display cell. As illustrated, the multicolour

display device has a fine pattern of colour filters which do not impair the display quality. Thus a colour graphic display device of the matrix type can be manufactured and driven with high reliability. Moreover, the display device, when caused to stand at 60°C for 1000 hours exhibited high reliability, continuing to retain substantially the original colours and electro-optical properties.

EXAMPLE 3

A multicolour liquid crystal display device similar to that of Example 2 was made with a negative-type guest-host liquid crystal material 12 using black dichroic colouring matter and a white material (white ceramic) as the substrate 6. A voltage was applied between the transparent electrodes 7 and the counter electrode 9. When viewing from the direction of the transparent counter substrate 10 through a polarising plate, the colours of the colour filters 8 were clearly displayed. When no voltage was applied, the colour of the dichroic colouring matter, namely black, was displayed. Effects substantially the same as those achieved from Example 2 were obtained.

EXAMPLE 4

A DSM (dynamic scattering mode) liquid crystal material was used as the display material 12 and aluminium was patterned on the counter substrate 6 by a mask evaporation technique to serve as the display electrode 7. Excepting these changes, the procedure of Example 2 was followed to make a multicolour liquid crystal display device. A voltage was applied between the transparent electrode 7 and counterelectrode 9. When viewing from the direction of the transparent counter substrate 10, the DSM liquid crystal material was in a light scattering state, and the colours of the colour filters 8 were displayed on a milk-white background. When no voltage was applied, the light scattering state disappeared and the display became dark. To produce the light scattering state of the DSM liquid crystal material efficiently, an ionic current of a given intensity had to be used, but this was reduced by the high resistance of the colour filters 8. Therefore, transparent electrodes whose patterns corresponded to those of the transparent electrodes 7 were provided on the colour filters 8 in contact with the DSM liquid crystal material. The transparent electrodes were used to apply a voltage to the DSM liquid crystal material, whereby the drive voltage was reduced and effects similar to those achieved in Example 2 were produced.

EXAMPLE 5

The reactive dyes used in Example 1 were replaced by reactive dyes having a phosphonate group (Trade Mark: PROCION T, manufactured by Imperial Chemical Industries, Ltd.). This dye was reactive under neutral or acidic conditions, and therefore the polyester resin of Example 1 was added to a neutralised aqueous solution of the reactive dye, and the reaction was effected with the application of heat. Since the reaction took place in a neutral environment, the polyester hardly decomposed and higher temperatures could be used than usual for the reaction.

Following the reaction, the procedures of Example 1 and Example 2 were repeated to manufacture a colour member and a multicolour display device. It achieved effects similar to those of Example 1 and Example 2.

EXAMPLE 6

A multicolour member and a multicolour display device were made from the same way as described in Examples 1 and 2 except that the reactive dyes were replaced by those having a vinylsulphonyl group (Trade Mark: SUMIFIX, manufactured by Sumitomo Chemical Co.) and similar effects were obtained.

EXAMPLE 7

A multicolour member and multicolour display device were made in the same way as in Examples 1 and 2 except that the reactive dyes used were those having a chloropyrimidinyl group (Trade Mark: DRIMARENE, manufactured by Sandoz Ltd.). Effects similar to those indicated in Examples 1 and 2 were obtained.

EXAMPLE 8

In place of the reactive dyes in Example 1, reactive dyes having a chloropyridazonyl group (Trade Mark: PRIMAZINE P, manufactured by BASF AG) were used. A multicolour member and a multicolour display device were made in the same manner as in Examples 1 and 2 and showed similar effects.

EXAMPLE 9

The reactive dyes of Example 1 were replaced by those having an alkylsulphate group including, e.g., that having a colour index number "CI Reactive Blue 19". The same procedures as in Examples 1 and 2 were followed to manufacture a multicolour member and a multicolour display device and generally the same effects were achieved.

EXAMPLE 10

The reactive dyes of Example 1 were replaced by those having a chloroquionoxalinyl group (Trade Mark: LEVAFIX E, manufactured by Bayer AG) instead of the reactive dyes of Example 1. A multicolour member and a multicolour display device were made in the same way as in Examples 1 and 2 to obtain similar effects.

EXAMPLE 11

In place of the polymer used in Example 1, an acrylic resin for anionic electrodeposition comprising acrylic acid and hydroxyethyl methacrylate as chief monomeric components and having an acid value of 50 and hydroxyl value of 40 was employed. This resin was presumed to have particularly the following structure:

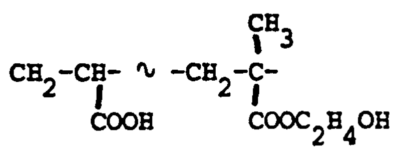

It again contained carboxyl and -OH groups and, like the polyester, it could be chemically bonded with a reactive dye prior to electrodeposition.

Excepting for this, the procedures of Example 1 and Example 2 were repeated to manufacture a multicolour member and a multicolour display device and effects similar to those in Examples 1 and 2 were obtained.

EXAMPLE 12

When a reactive dye having a dichlorotriazinyl group (Trade Mark: MIKACION, manufactured by Mitsubishi Chemical Industries Ltd.) was dissolved in water and calcium chloride was added, the dye was made insoluble in water and formed a coloured precipitate. This insolubilised colouring matter was filtered, separated, thoroughly washed with water, and dried. The resulting colouring matter was mixed with and thoroughly dispersed in a mixed polyester-melamine coating material for anionic deposition (Trade Mark: S-VIA ED 3000, manufactured by Shinto Paint Co.) at a colouring matter to coating material ratio of 2:8. This mixture was diluted with water to an aqueous solution at a resin concentration of 10% by weight, and the resulting solution was used as an electrodeposition bath.

Using this electrodeposition bath in the same manner as described in Examples 1 and 2, a multicolour member and a multicolour display device were made and similar effects were obtained.

In this Example, the bonding between the colouring matter and the coating material presumably took place when the polyester and melamine were cured together. It is likely that the colouring matter reacts with the methylol group of the melamine resin as well as with the carboxyl and -OH groups of the polyester resin.

EXAMPLE 13

When a reactive dye having an acrylamide group (Trade Mark: LANASOL, manufactured by Ciba-Geigy) was dissolved in water and then calcium chloride was added, the dye became insoluble in water and

formed a coloured precipitate. The insolubilised colouring matter was filtered, separated, thoroughly washed with water, and dried. This colouring matter was mixed with and thoroughly dispersed in an acrylic coating material for cationic electrodeposition (Trade Mark: S-VIA ED 5000, manufactured by Shinto Paint Co.) at a colouring matter to coating material ratio of 2:8. The resulting mixture was diluted with water to prepare an aqueous solution at a resin concentration of 10% by weight as an eletrodeposition bath.

Then, the polarity of the applied voltage for electrodeposition in Example 1 was reversed and, otherwise in the same way as in Examples 1 and 2, using this electrodeposition bath, a multicolour member and a multicolour display device were manufactured and effects similar to those in Examples 1 and 2 were obtained. The reaction that took place in the coloured layer in this embodiment was considered to be a reaction of the colouring matter with the acrylamide resin.

The present invention makes it possible to obtain a multicolour member having a fine multicolour pattern in a simple way by taking advantage of electrodeposition and to manufacture colour filters without resorting to any special means such as a resist treatment for separating the individual colours for multicolour representation. The colour filters thus made are strong and durable because the colouring matter and the polymer are chemically bonded and the patterns are in good register. When combined with display materials such as liquid crystal materials, they can realise high display quality and reliability.

## Claims

**1.** A colour filter element comprising a substrate (6), a plurality of discrete electrodes (7) of an electroconductive material on the substrate having a desired pattern, and a coloured layer which contains a polymer and colouring matter and which is formed on the electrodes by electrodeposition, characterised in that the colouring matter is a dye having a reactive group and in that the polymer and the dye in the coloured layer are chemically bonded to each other by a covalent linkage with the reactive group.

**2.** A colour filter element as claimed in claim 1 characterised in that the electrodes (7) are light transmissive.

**3.** A colour filter element as claimed in claim 1 or 2 characterised in that the electroconductive material of the electrodes (7) includes at least one of tin oxide, indium oxide and antimony oxide.

**4.** A colour filter element as claimed in any preceding claim characterised in that the reactive group is at least one of phosphonate, monochlorotriazinyl, dichlorotriazinyl, vinylsulphonyl, chloropyrimidinyl, chloropyridazonyl, alkylsulphate, chloroquinoxalinyl, and acrylamide groups.

**5.** A colour filter element as claimed in any preceding claim characterised in that the polymer consists substantially of at least one of water-soluble or dispersible acrylic, polyester and melamine resins.

**6.** A method of manufacturing a colour filter element comprising the steps of forming a plurality of discrete electrodes of an electroconductive material on a substrate and forming a coloured layer on the electrodes by electro-depositing a polymer and colouring matter, characterised by chemically bonding the polymer and the colouring matter, which is a dye having a reactive group by a covalent linkage with the reactive group.

**7.** A method as claimed in claim 6 characterised in that the reactive group is at least one of phosphonate, monochlorotriazinyl, dichlorotriazinyl, vinylsulphonyl, chloropyrimidinyl, chloropyridazonyl, alkylsulphate, chloroquinoxalinyl, and acrylamide groups.

**8.** A method as claimed in claim 6 or 7 characterised in that the polymer consists substantially of at least one of water-soluble or dispersible acrylic, polyester and melamine resins.

**9.** A method as claimed in any of claims 6 to 8 characterised by chemically bonding the polymer and the colouring matter to each other prior to electrodeposition.

**10.** A method as claimed in any of claims 6 to 8 characterised by chemically bonding the polymer and the colouring matter to each other after electrodeposition.

## Patentansprüche

1. Farbfilterelement, umfassend ein Substrat (6), eine Vielzahl von einzelnen Elektroden (7) aus einem elektrisch leitfähigen Material auf dem Substrat mit einem gewünschten Muster und eine gefärbte Schicht, die ein Polymer und ein Färbemittel enthält und die auf den Elektroden durch Elektroabscheidung gebildet wird,
   **dadurch gekennzeichnet**,
   daß das Färbemittel ein Farbstoff mit einer reaktiven Gruppe ist und das Polymer und der Farbstoff durch eine kovalente Bindung mit der reaktiven Gruppe aneinander chemisch gebunden sind.

2. Farbfilterelement nach Anspruch 1,
   **dadurch gekennzeichnet**,
   daß die Elektroden (7) lichtdurchlässig sind.

3. Farbfilterelement nach Anspruch 1 oder 2,
   **dadurch gekennzeichnet**,
   daß das elektrisch leitfähige Material der Elektroden (7) mindestens eines von Zinnoxid, Indiumoxid und Antimonoxid enthält.

4. Farbfilterelement nach einem der vorhergehenden Ansprüche, **dadurch gekennzeichnet**,
   daß die reaktive Gruppe mindestens eine von Phosphonat-, Monochlortriazinyl-, Dichlortriazinyl-, Vinylsulfonyl-, Chlorpyrimidinyl-, Chlorpyridazonyl-, Alkylsulfat-, Chloroquinoxalinyl- und Acrylamidgruppen ist.

5. Farbfilter nach einem der vorhergehenden Ansprüche,
   **dadurch gekenzeichnet**,
   daß das Polymer im wesentlichen aus mindestens einem von wasserlöslichen oder dispergierbaren Acryl-, Polyester- und Melaminharzen besteht.

6. Verfahren zur Herstellung eines Farbfilterelements, umfassend die Schritte des Bildens einer Vielzahl von einzelnen Elektroden eines elektrisch leitfähigen Materials auf einem Substrat und des Bildens einer gefärbten Schicht auf den Elektroden durch Elektroabscheidung eines Polymers und eines Färbemittels,
   **gekennzeichnet durch**
   chemisches Binden des Polymers und des Färbemittels, das ein Farbstoff mit einer reaktiven Gruppe ist, durch eine kovalonte Bindung mit der reaktiven Gruppe.

7. Verfahren nach Anspruch 6,
   **dadurch gekennzeichnet**,
   daß die reaktive Gruppe mindestens eine von Phosphonat-, Monochlortriazinyl-, Dichlortriazinyl-, Vinylsulfonyl-, Chlorpyrimidinyl-, Chlorpyridazonyl-, Alkylsulfat-, Chloroquinoxalinyl- und Acrylamidgruppen ist.

8. Verfahren nach Anspruch 6 oder 7,
   **dadurch gekennzeichnet**,
   daß das Polymer im wesentlichen aus mindestens einem von wasserlöslichen oder dispergierbaren Acryl-, Polyester- und Melaminharzen besteht.

9. Verfahren nach einem der Ansprüche 6 bis 8,
   **gekennzeichnet durch**
   chemisches Binden des Polymers und des Färbemittels aneinander vor der Elektroabscheidung.

10. Verfahren nach einem der Ansprüche 6 bis 8,
    **gekennzeichnet durch**
    chemisches Binden des Polymers und des Färbemittels aneinander nach der Elektroabscheidung.

## Revendications

1. Un élément de filtre de couleur comprenant un substrat (6), un ensemble d'électrodes discrètes (7) en un matériau conducteur de l'électricité sur le substat, ayant une configuration désirée, et une couche colorée qui contient un polymère et une matière colorante et qui est formée sur les électrodes par électrodéposition, caractérisé en ce que la matière colorée est un colorant contenant un groupe réactif, et le polymère et le colorant sont liés chimiquement l'un à l'autre par une liaison covalente avec le groupe réactif.

2. Un élément de filtre de couleur selon la revendication 1, caractérisé en ce que les électrodes (7) transmettent la lumière.

3. Un élément de filtre de couleur selon la revendication 1 ou 2, caractérisé en ce que la matériau conducteur de l'électricité des électrodes (7) comprend l'un au moins des corps suivants : l'oxyde d'étain, l'oxyde d'indium et l'oxyde d'antimoine.

4. Un élément de filtre de couleur selon l'une quelconque des revendications précédentes, caractérisé en ce que le groupe réactif est l'un au moins des groupes suivants : phosphonate, monochlorotriazinyle, dichlorotriazinyle, vinylsulfonyle chloropyrimidinyle, chloropyridazonyle, alkylsulfate , chloroquinoxalinyle et acrylamide.

5. Un élément de filtre de couleur selon l'une quelconque des revendications précédentes, caractérisé en ce que le polymère est constitué pratiquement par au moins une résine soluble dans l'eau ou pouvant être mise en dispersion dans l'eau, du type acrylique, polyester ou mélamine.

6. Un procédé de fabrication d'un élément de filtre de couleur comprenant les étapes qui consistent à former un ensemble d'électrodes discrètes en un matériau conducteur de l'électricité sur un substrat, et à former une couche colorée sur les électrodes, par électrodéposition d'un polymère et d'une matière colorante, caractérisé en ce qu'on lie chimiquement le polymère et la matière colorante, qui est un colorant ayant un groupe réactif par une liaison covalente avec le groupe réactif.

7. Un procédé selon la revendication 6, caractérisé en ce que le groupe réactif est l'un au moins des groupes suivants : phosphonate, monochlorotriazinyle, dichlorotriazinyle, vinylsulfonyle , chloropyrimidinyle, chloropyridazonyle, alkylsulfate , chloroquinoxalinyle et acrylamide.

8. Un procédé selon la revendication 6 ou 7, caractérisé en ce que les polymère est constitué pratiquement par au moins une résine soluble dans l'eau ou pouvant être dispersée dans l'eau, du type acrylique, polyester ou mélamine.

9. Un procédé selon l'une quelconque des revendications 6 à 8, caractérisé en ce qu'on lie chimiquement ensemble le polymère et la matière colorante avant l'électrodéposition.

10. Un procédé selon l'une quelconque des revendications 6 à 8, caractérisé en ce qu'on lie chimiquement ensemble le polymère et la matière colorante après l'électrodéposition.

Fig.1.

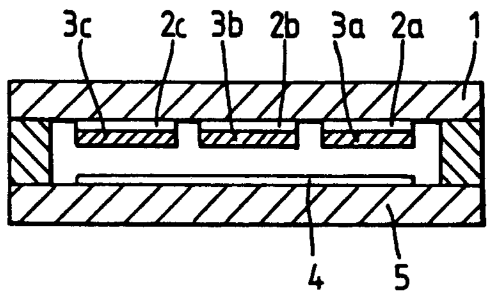


Fig.2.

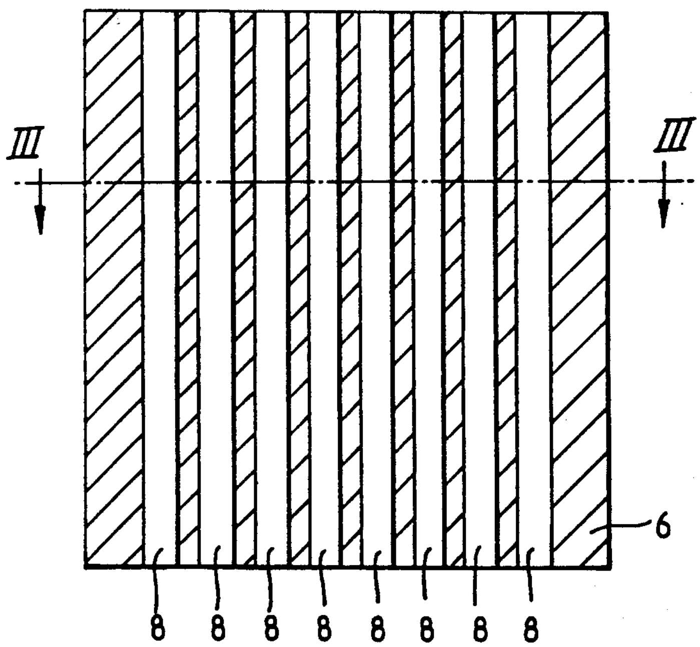


Fig.3.

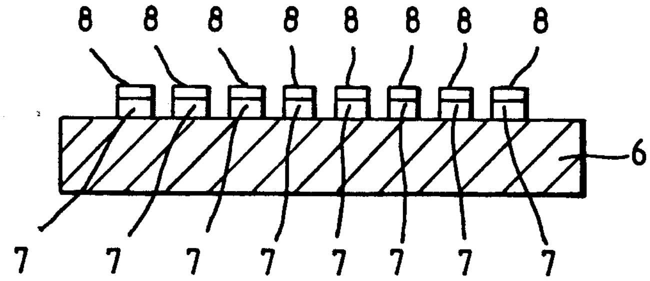

Fig.4.

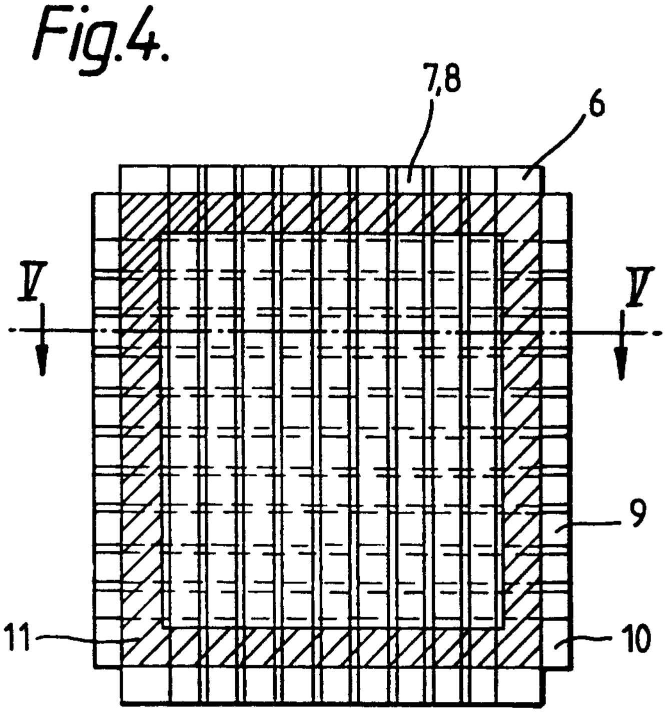


Fig.5.